# EUROPÄISCHE PATENTSCHRIFT

(11) **EP 2 201 081 B1**
(45) Veröffentlichungstag und Bekanntmachung des Hinweises auf die Patenterteilung: **13.08.2014**
(21) Anmeldenummer: 08804161.1
(22) Anmeldetag: 12.09.2008
(51) Int. Cl.: C09K 8/035, C09K 8/22, C09K 8/28

(54) **ADDITIVE FÜR WASSERBASIERTE BOHRSPÜLMITTEL**
ADDITIVES FOR WATER-BASED DRILLING FLUIDS
ADDITIFS POUR FLUIDES DE FORAGE À BASE D'EAU

(30) Priorität: 14.09.2007 EP 07018086
(43) Veröffentlichungstag der Anmeldung: 30.06.2010
(73) Patentinhaber: Emery Oleochemicals GmbH, 40589 Düsseldorf (DE)
(72) Erfinder: WESTFECHTEL, Alfred, 40724 Hilden (DE); MÄKER, Diana, 40822 Mettmann (DE); MÜLLER, Heinz, 40789 Monheim (DE)
(74) Vertreter: Kinkeldey, Daniela
(86) Internationale Anmeldenummer: PCT/EP2008/062200
(87) Internationale Veröffentlichungsnummer: WO 2009/037212

(56) Entgegenhaltungen:
- EP-A- 0 579 159
- EP-A1- 1 704 846
- EP-A2- 1 518 900
- WO-A-2007/068404
- DE-A1- 3 622 826
- DE-A1- 4 226 174
- DE-A1- 19 852 971

## Beschreibung

Die vorliegende Anmeldung betrifft den Einsatz bestimmter Ester als Additiv in wasserbasierten Bohrspülmitteln, sowie wasserbasierte Bohrspülmitteln, die diese Additive enthalten. Die erfindungsgemäßen Additive dienen dabei insbesondere der Verbesserung der Schmierwirkung der Bohrspülungen.

Flüssige Spülsysteme zur Niederbringung von Gesteinsbohrungen unter Aufbringung des abgelösten Bohrkleins, im weiteren allgemein Bohrspülungen genannt, sind ggf. eingedickte fließfähige Systeme auf Wasser- oder auf Ölbasis. Die Klasse der rein wasserbasierten Spülsysteme reicht in der geschichtlichen Entwicklung am weitesten in die Vergangenheit zurück. Ihr Einsatz ist jedoch mit Defiziten verbunden, wobei insbesondere die zu geringe Schmierwirkung der Spülung als Nachteil hervorzuheben ist. Das Arbeiten mit rein wasserbasierten Systemen macht daher die Mitverwendung von Komponenten mit Schmiermittelwirkung notwendig. Für den praktischen Einsatz ist eine Vielzahl von Additiven als Schmiermitteln bekannt. Dazu zählen z.B. Mineralöle oder tierische und pflanzliche Öle, also Triglyceride von Fettsäuren sowie Carbonsäureester von Monoalkoholen. Weiterhin werden in der Praxis Sulfonate von pflanzlichen Ölen, insbesondere das Sojaölsulfonat, als Schmiermittel eingesetzt. Sojaölsulfonat kann in wasser- und ölbasierten Systemen eingesetzt werden, es zeigt aber insbesondere bei wasserbasierten Spülungen ein deutliches Schäumen, was die Gebrauchseigenschaften einschränkt.

Die zunehmend strengeren Bestimmungen bezüglich der biologischen Abbaubarkeit von Bohrspülsystemen bzw. deren Inhaltsstoffen lassen die Verwendung der ansonsten gut geeigneten Mineralöle immer seltener zu. Gleichzeitig wächst das Interesse an biologisch besser abbaubaren Alternativen, insbesondere an den Estern. Die EP 0 770 661 beschreibt Ester von Monocarbonsäuren mit einwertigen Alkoholen als geeigneten Schmiermittel für wasserbasierte Bohrspülsysteme. Konkret wird ein 2-Ethylhexyloleat als geeignetes Schmiermittel für silikathaltige wässerige Spülungen offenbart. Die DE 196 47 598 beschreibt C12-30-Fettalkohole und deren Abmischung mit Fettsäureestern als geeignete Schmiermittel für rein wasserbasierte, silikathaltige Bohrspülungen. Als Ester werden auch Triglyceride von Fettsäuren genannt. Es ist bekannt, dass insbesondere Carbonsäureestern zum Zweck des Erdreichaufschlusses eine besonders ausgeprägte Schmiermittelwirkung zukommt, von der in vielfacher Weise Gebrauch gemacht wird. Ihr Einsatz in wasserbasierten Systemen und insbesondere in vergleichsweise hochalkalischen Wasserglassystemen kann jedoch zu beträchtlichen Schwierigkeiten führen. Durch Esterspaltung können nämlich als Sekundärprodukte Komponenten mit starker Tendenz zur Schaumbildung entstehen, die dann unerwünschte Probleme in das Spülsystem einführen.

In der DE 10 2005 060 549 A1 wird ein Additiv, enthaltend Ethercarbonsäuren in Abmischung mit Fettsäuretriglyceriden als Schmiermitteladditiv für wasserbasierte Bohrspülmittel beschrieben.

DE 36 22 826 A1 betrifft pulverförmige Schmiermittel- Additive und deren Verwendung für Bohrspülungen im Erdöl- bzw. Bergbau-Drillingbereich.

DE 42 26 174 A1 offenbart ein Polyglycerinfettsäureestergemisch aus Mono-, Di-und Polyestern mit einem Polymerisationsgrad von 2 bis 8 als Badezusatzpräparat.

Die in EP 0 579 159 (A2) beschriebene Erfindung betrifft ein Verfahren zur Herstellung von Polyglycerinfettsäureestergemischen, Verdickungsmitteln und O/W-Emulgatoren.

DE 198 52 971 betrifft die Verwendung von Partialgylceriden als Schmiermittel in Bohrspülmitteln für den Erdreichaufschluss.

WO 2007/068404 offenbart Ethercarbonsäuren als Additive zur Verbesserung der Schmierwirkung von wasserbasierten Bohrspülungen.

Es wurde nun gefunden, dass durch Verwendung bestimmter Ester ebenfalls eine Verbesserung der Schmierwirkung von wasserbasierten Bohrspülungen bewirkt werden kann.

Gegenstand der Erfindung ist die Verwendung von Oligoglycerinfettsäureestern, hergestellt aus (a) einer Säurekomponente, ausgewählt aus
(a1) Fettsäuren der allgemeinen Formel (I) R-COOH (I) in der R für einen gesättigten oder ungesättigten, verzweigten oder linearen Alkyl- oder Alkenylrest mit 7 bis 21 C-Atomen steht, wobei als Fettsäuren für die Veresterung die Ölsäure oder die Tallölfettsäuren oder Mischungen davon ausgewählt sind, und
(b) einer Polyolkomponente, die ausgewählt ist aus Oligoglycerinen oder Alkoxylaten von Oligoglycerinen, wobei die Oligoglycerine Tetraglycerin und Pentaglycerin umfassen, als Additiv in wasserbasierten Bohrspülmitteln, vorzugsweise zur Verbesserung der Schmierfähigkeit der Spülungen.

Die erfindungsgemäßen Oligoglycerinester sind an sich bekannte Verbindungen, die z.B. durch sauer oder basisch katalysierte Veresterung direkt aus Oligoglycerin mit den Fettsäuren erhalten werden können. Die Oligoglycerinester werden auch als Oligoglycerinfettsäureester oder Oligoglyceride bezeichnet. Die EP 064 697 A1 beschreibt verschiedene Oligoglycerinester als Gleitmittel für PVC. In dieser Schrift wird auch die Herstellung der Oligolycerinester mittels basischer Katalyse aus Fettsäuren und Poly- bzw. Oligoglycerinen beschrieben. Die Oligoglycerinester (oder kurz "Oligoglyceride") im Sinne der Erfindung sind in der Regel bei Raumtemperatur flüssige Verbindungen, die aus einer Mischung unterschiedlicher Oligoglycerinester bestehen, wobei noch Ausgangstoffen, insbesondere Glycerin enthalten sein können. Typischerweise enthalten technische Oligoglycerine, die zur Herstellung von den erfindungsgemäßen Oligoglycerinestern verwendet werden können Mischungen aus Di- und Triglygerin sowie Tetra- und Pentaglycerine sowie Glycerin. Je nach Qualität der Oligoglycerine können diese zwischen 20 und 45 Gew.-% an Glycerin, zwischen 20 und 40 Gew.-% Diglycerin, zwischen 10 und 20 Gew.-% Triglycerin und zwischen 1 bis 10 Gew.-% an Tetraglycerin sowie zwischen 0,5 bis 5 Gew.-% an Pentaglycerin enthalten.

Aus der DE 102 52 973 A1 ist bereits bekannt, Oligoglycerinfettsäureester zusammen mit einem ausgewählten Alkylphenolharz zur Verbesserung der Schmierfähigkeit von Brennstoffölen einzusetzen. Die US 2003/0114316 A1 offenbart Invert-Bohrspülungssysteme, also Mittel die eine Wasser- und Ölphase in Form nebeneinander in emulgierter Form, und zwar ausschließlich als Wasser-in-Öl-Emulsion enthalten, wobei die Ölphase kontinuierlich ist und die Wasserphase die diskontinuierliche Phase darstellt, wobei diese Invert-Systeme entweder Fettsäureester des Di- bzw. Triglycerins oder Ester von Polyglycerinen, jeweils mit Fettsäuren des Schnitts C10-C20 als Emulgatoren enthalten müssen. Die Ester dieser Schrift sind zwingend Diester dieser C10-C20 Fettsäuren mit Di- oder Triglycerin bzw. Polyglycerinen, wobei namentlich nur das Polyglycerin-2-diisostearat und Polyglycerin-3-diisostearat offenbart werden. Diese Ester dienen nach der Lehre der US 2003/0114316 als Emulgatoren, um die gewünschte Invert-Emulsion herzustellen.

Als Säurekomponente (a) der erfindungsgemäßen Ester kommen insbesondere die Fettsäuren des Typs (a1) in Frage, die der Formel (I) folgen wobei als Fettsäuren für die Veresterung die Ölsäure oder die Tallölfettsäuren oder Mischungen davon ausgewählt sind. Hier seien als bevorzugt genannt die Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren Mischungen, die z.B. technisch bedingt, bei der Druckspaltung von natürlichen Fetten und Ölen, bei der Reduktion von Aldehyden aus der Roelen'schen Oxosynthese anfallen.

Besonders bevorzugt sind Oligoglycerinester, worin die Fettsäurekomponente (a1) ausgewählt ist aus einfach oder mehrfach ungesättigten, vorzugsweise linearen Fettsäuren und vorzugsweise den linearen ungesättigten Monocarbonsäuren wobei als Fettsäuren für die Veresterung die Ölsäure oder die Tallölfettsäuren oder Mischungen davon ausgewählt sind, wobei die Ölsäure, auch in technischen Qualitäten, besonders bevorzugt ist.

Ebenfalls bevorzugt sind Oligoglycerinester deren Komponente (a1) aus Tallölfettsäuren ausgewählt ist. Tallölfettsäuren enthalten insbesondere Mischungen aus Linolsäure und konjugierte C18-Fettsäuren (45-65 Gew.-%), Ölsäure (25-45 Gew.-%), Octadeca-5,9,12-triensäure (5-12 Gew.-%) und gesättigte Fettsäuren (1-3 Gew.-%).

Auch Mischungen von Oligoglycerinester, die in Gegenwart unterschiedlicher Fettsäurequellen hergestellt worden sind, oder durch Mischung erhalten werden, sind als Polyokomponente für die Veresterung bevorzugt. Bevorzugt sind unter anderem auch solche Oligoglycerinester, die durch Umsetzung von Oligoglycerinen der Formel (II) mit Fettsäuremischungen, vorzugsweise Mischungen aus gesättigten und ungesättigten Fettsäuren (Typ (a1)) hergestellt worden sind, wobei als Fettsäuren für die Veresterung die Ölsäure oder die Tallölfettsäuren oder Mischungen davon ausgewählt sind.

Die Komponente (b), also die Oligoglycerine im Sinne der vorliegenden Lehre, enthalten zwischen 2 und 10 Glycerinmonomeren im Molekül, wobei in Abhängigkeit des Herstellprozesses (z.B. der Reaktionstemperatur oder -zeit bzw. den verwendeten Katalysatoren) Mischungen verschiedener Oligomeren nebeneinander vorliegen. Moleküle mit mehr als 10 Monomeren Glycerin werden als Polyglycerine bezeichnet.

Die Polyolkomponente (b) der erfindungsgemäßen Ester, also die Oligoglycerine können vorzugsweise mit der folgenden allgemeinen Formel (II) beschrieben werden: 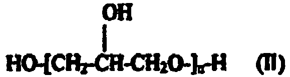 wobei n eine Zahl zwischen 2 und 10 bedeutet. Vorzugsweise können solche Oligoglycerine als Polyolkomponente (b) zum Einsatz kommen, die zwischen 4 und 10 Olycerinmonomeren enthalten. Die Ester folgen dann vorzugsweise der aligemeinen Formel (III): 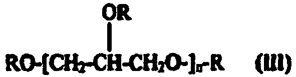 In der n für Zahlen zwischen 2 und 10 steht und R entweder ein Wasserstoffatom oder einen Rest CO-R' darstellt, worin R' dann einen gesättigten oder ungesättigten Alkyl- oder Alkenylrest mit 7 bis 21 C-Atomen repräsentiert, wobei mindesten eine OH-Funktion des Oligoglycerins verestert sein muss. Es ist aber bevorzugt solche Oligoglycerine zu verwenden die zwischen 4 und 10 Monomere Glycerin pro Molekül Oligoglycerin enthalten. In den Formeln (II) und (III) bedeutet das einen Index zwischen 4 und 10.

Die oben gezeigte Formel (III) gibt Oligoglycerinester mit der Säurekomponente (a1) wieder.

Neben den Oligoglycerinen können auch deren Alkoxylate, also Umsetzungsprodukte von Oligoglycerinen mit Ethylenoxid und/oder oligomeren von alkoxyliertern Glycerin mit Ethylenoxid und/oder Propylenoxid als Alkoholkomponente für die erfindungsgemäßen Ester eingesetzt werden. Bevorzugt sing hier die ethoxylierten Oligoglycerine.

Es ist bevorzugt, wenn bei der Veresterung das molare Verhältnis von Fettsäuren-Oligoglycerin im Bereich von 5 : 1 bis 1 : 1, vorzugsweise 4 : 1 bis 1 : 1 und insbesondere im Bereich von 4 : 1 bis 1,5 : 1 liegt.

Weiterhin entspricht es einer bevorzugten Ausführungsform, daß zur Herstellung der Oligoglycerinfettsflureester bei der Veresterung das molare Verhältnis der Zahl der Carboxylgruppen der Säurekomponents zur Zahl der Hydroxygruppen der Polyolkomponente in einem Bereich von 5 : 1 bis 1 : 1, vorzugsweise 4 : 1 bis 1 : 1 und insbesondere im Bereich von 4 : 1 bis 1,5 : 1 liegt.

Werden Michungen mehrerer Säurekomponenten eingesetzt, ist die Zahl der Carboxylgruppen die Summe der Carboxylgruppen aller Säurekomponenten. Werden Mischungen mehrerer Polyolkomponenten eingesetzt, ist die Zahl der Hydroxygruppen die Summe der Hydroxygruppen aller Polyolkomponenten.

In Abhängigkeit von den Reaktionsbedingungen der Veresterung können Vollester oder Mischungen der unterschiedlichen Partialester, ggf. in Abmischung mit Vollestern nebeneinander vorliegen. Die Oligogylcerinester im Sinne der vorliegenden technischen Lehre stellen überwiegend Partialester dar, wobei Oligoglycerintriester und/oder Tetra- und/oder Pentaester bevorzugt sind.

Die Oligoglycerinester der Erfindung werden in wasserbasierten Spülungen als Additiv, insbesondere zum Schmieren, eingesetzt. Hierbei ist die Wirkung der erfindungsgemäßen Oligoglycerinester als Schmiermittel bevorzugt. Eine Verwendung als Schmiermittel, insbesondere zum Schmieren, ist dabei so definiert, dass die Reibung der Spülung, z.B. mit dem Bohrgestänge und/oder der Formation - durch Zusatz des Mittels messbar verringert wird.

Ein weiterer Gegenstand der Erfindung betrifft daher die Verwendung der erfindungsgemäßen Oligoglycerinfettsäureester zum Schmierenfür Bohrspülmittel, die mindestens 70 Gew. -% und vorzugsweise mindesten 80 Gew.-% und ganz besonders mindestens 90 Gew.-% Wasser - bezogen auf die bei Raumtemperatur (21 °C) flüssige Phase verwendet werden. Bevorzugt ist auch die Verwendung in solchen Emulsionsbohrspülungen, deren äußere Phase aus Wasser gebildet wird.

Als wasserbasierte Bohrspülungen (WBM = water based mud) werden dabei im Folgenden solche Systeme verstanden, die vorzugsweise zu mehr als 60 Gew.-% Wasser - bezogen auf die bei Raumtemperatur (21 °C) flüssige Phase des Mittels - enthalten, vorzugsweise zu mehr als 70 Gew.-% und insbesondere zu mehr als 80 Gew.-% und besonders bevorzugt mehr als 90 Gew.-% Wasser als flüssige Phase enthalten. Besonders bevorzugt können weiterhin reine Wasserspülungen sein (100 Gew.-% der flüssigen Phase ist Wasser). Als Wasser eignet sich neben Süßwasser auch synthetisches oder natürliches Seewasser.

Die vorliegende Lehre umfasst, wie oben bereits ausgeführt, explizit auch solche wasserbasierten Spülungen, die Emulsionen ausbilden, allerdings nur solche vom Typ Öl-in-Wasser (O/W) - Wasser bildet also in diesen erfindungsgemäßen Systeme die äußere Phase.

Emulsionen im Sinne der vorliegenden Lehre enthalten vorzugsweise auch nur untergeordnete Mengen einer Ölphase, beispielsweise weniger als 20 Gew.-%, vorzugsweise weniger als 10 Gew.-% oder insbesondere weniger als 5 Gew.-%, bezogen auf die gesamte flüssige Phase. Solche Ölphasen in den wasserbasierten Spülungen im Sinne der vorliegenden Erfindung werden beispielsweise durch nicht-wasserlösliche Öle gebildet, die zum Lösen oder Dispergieren von Additiven benötigt werden.

Wasser-basierte Bohrspülungen enthalten neben dem Wasser als Trägerflüssigkeit in der Regel mindestens noch ein Mittel zur Erzeugung einer erhöhten Viskosität, wobei dazu sowohl mineralische als auch organische Verbindung Verwendung finden können. Die zur Rheologiekontrolle im Rahmen von wässrigen Bohrspülungen eingesetzten mineralischen Viskositätsbildner sind quellfähige Tone natürlichen und/oder synthetischen Ursprungs. Als Beispiele seien entsprechende Smectite wie Montmorillonit, Bentonit, Beidelitt, Hectorit, Saponit und Stevensit benannt. Attapulgit ist ein weiteres wichtiges wasserquellbares Hilfsmittel der hier betroffenen Art. Eine Reihe von Vorschlägen beschäftigt sich mit der synthetischen Herstellung feinteiliger Ton-ähnlicher Mineralien, insbesondere entsprechender Verbindungen des Hectorit- und/oder Saponit-Typs. Geeignet sind auch organische Verbindungen, vorzugsweise Polymere. Genannt seine hier z.B. Xanthan Gum oder verschiedene Cellulose-Derivate. Bevorzugt ist insbesondere Bentonit.

Die Oligoglycerinester gemäß der obigen Beschreibung können entweder alleine oder in Abmischung mit weiteren, vorzugsweise öllöslichen Komponenten in Bohrspülmitteln als Additiv, insbesondere zum Schmieren, wobei die Reibung der Spülung, z.B. mit dem Bohrgestänge und/oder der Formation - durch Zusatz des Mittels messbar verringert wird, verwendet werden. Geeignet und bevorzugt sind dabei Kohlenwasserstoffe, Fettsäureester, Fettsäuren, Fettalkoholen, Tenside, Glycerin, Triglyceride, Glykolen oder beliebige Mischungen dieser Verbindungen.

Als Kohlenwasserstoffe werden erfindungsgemäß insbesondere lineare oder verzweigte Paraffine mit 5 bis 22 C-Atomen eingesetzt. Weiterhin geeignete Kohlenwasserstoffe sind interne Olefine (im Weiteren als IO abgekürzt). Dabei sind IO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der alpha-Position der Alkylkette befindet. Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten. Vorzugsweise weisen die erfindungsgemäß verwendeten Olefine nur eine olefinische Doppelbindung auf.

Weiterhin sind Ester der allgemeinen Formel R'-COO-R", in der R' für einen linearen oder verzweigten, gesättigten oder ungesättigten Alkylrest mit 15 bis 25 C-Atomen steht und R" einen gesättigten, linearen oder verzweigten Alkylrest mit 6 bis 22 C-Atomen bedeutet, Bestandteil der erfindungsgemäßen Mittel. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Besonders bevorzugt ist die Verwendung solcher Ester deren Rest R' für einen gesättigten oder ungesättigten Alkylrest mit 15 bis 25 und R" für einen gesättigten Alkylrest mit 3 bis 10 C-Atomen steht. Die gesättigten Verbindungen sind dabei im Besonderen bevorzugt. Besonders ausgewählte Ester enthalten verzweigte Alkohole, hier insbesondere 2-Ethylhexyl-Reste. Besonders bevorzugte als Mischungs-komponente zusammen mit den Oligoglycerinester ist ein 2-Ethylhexyllaurylester.

Auch Fettalkohole sind geeignete Mischungskomponenten. Fettalkohole folgen der allgemeinen Formel R"'-OH, wobei R"' für einen gesättigten oder ungesättigten, verzweigten oder unverzweigten Alkyl- bzw. Alkenylrest mit 4 bis 22 C-Atomen steht. Bevorzugt sind Fettalkohole mit 16 bis 22 und insbesondere 16 bis 18 C-Atomen. Ebenfalls bevorzugt sind lineare und unabhängig davon gesättigte Fettalkohole. Besonders bevorzugt sind lineare, ungesättigte Fettalkohole mit 16 bis 18 C-Atomen.

Tenside sind ebenfalls geeignete Zumischkomponenten für die Oligoglycerinester. Dabei können im Prinzip alle Arten von Tensiden, seien es Anionische, nichtionischcm zwitterionische oder kationische Tenside Verwendung finden. Bevorzugt sind aber die nichtionischen und die anionischen Tenside.

Typische Beispiele für anionische Tenside sind Seifen, Alkylbenzolsulfonate, Alkansulfonate, Olefinsulfonate, Alkylethersulfonate, Glycerinethersulfonate, Methylestersulfonate, Sulfofettsäuren, Alkylsulfate, Fettalkoholethersulfate, Glycerinethersulfate, Fettsäureethersulfate, Hydroxymischethersulfate, Monoglycerid(ether)sulfate, Fettsäure-amid(ether)-sulfate, Mono- und Dialkylsulfosuccinate, Mono- und Dialkyl-sulfosuccinamate, Sulfotriglyceride, Amidseifen, Ethercarbonsäuren und deren Salze. Letztere sind im Sinne der vorliegenden technischen Lehre besonders bevorzugte Tensidkomponenten.

Typische Beispiele für nichtionische Tenside sind Fettalkoholpolyglycolether, Alkyl-phenolpolyglycolether, Fettsäurepolyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen.

Die Tenside sind eine optionaler Bestandteil in den Additiven. Sie werden vorzugsweise in Mengen von 0,05 bis 5 Gew.-%, insbesondere von 0,1 bis 3 und bevorzugt von 1 bis 2,5 Gew.-% eingesetzt, jeweils bezogen auf die gesamte Spülung.

Neben dieser Komponente können noch andere, wasserunlösliche Bestandteile zusammen mit den Oligoglycerinestern verwendet werden, und zwar im Einzelnen:
(i) Ester aus C1-5-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Ester oder Mischungen von Estern, ausgewählt aus der Gruppe Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nona-decylcarboxylat, Eicosylcarboxylat, U-neicocarboxylat, Doeicosylcarboxylat und Isomeren davon, wobei diese Ester jeweils eine Carboxylat-Rest mit 1 bis 5 C-Atomen aufweisen,
(iii) wasserunlösliche Ether einwertiger Alkohole mit 6 bis 24 C-Atomen,
(iv) wasserunlösliche Alkohole mit 8 bis 36 C-Atomen
(v) poly-Alphaolefine (PAO) und alpha-Olefine
(vi) Carbonate
(vii) Mischungen der Komponente (i) bis (vi)

Werden die Oligoglycerinester mit anderen Komponenten zusammen als Additiv verwendet so werden die Oligoglycerinester und die anderen Komponenten vorzugsweise in Gewichtsverhältnissen von 20 : 1 bis 1 : 1, vorzugsweise von 8 : 1 bis 6 :1 und insbesondere von 5 : 1 bis 1 : 1 zusammen verwendet.

Die Additive (ggf. also nur der Oligolgycerinester bzw. Mischungen unterschiedlicher Oligoglycerinester) werden im Sinne der Erfindung vorzugsweise in Mengen von 10 bis 0,1 Gew.-%, bezogen auf das Gesamtgewicht der Spülung eingesetzt. Vorteilhafte Bereiche sind 5 bis 1 Gew.-%, und insbesondere 3 bis 1,5 Gew.-%.

Neben den oben aufgeführten Bestandteilen, enthalten die erfindungsgemäßen Mittel noch optional weitere Additive, beispielsweise Beschwerungsmittel, fluid-loss Additive, viskositätsregulierende Additive, Netzmittel, Salze, Biozide, Korrosionsinhibitoren, und/oder eine Alkalireserve.

Die Additive können wasserlöslich, öllöslich und/oder wasser- bzw. öldispergierbar sein. Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biozide, beispielsweise zur Hemmung des bakteriellen Befalls von O/W-Emulsionen und dergleichen. Nur auszugsweise sei dementsprechend zitiert: Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die sogenannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate.

Die Erfindung betrifft auch ein wasserbasiertes Bohrspülmittel, enthaltend die erfindungsgemäßen Oligoglycerinfettsäureester.Ein weiterer Gegenstand der vorliegenden Erfindung betrifft wasserbasierte Bohrspülungen, die in Mengen von 1 bis 10 Gew.-%, bezogen auf die gesamte Spülung, eines Additivs, enthaltend oder bestehend aus Oligoglycerinestern gemäß der obigen Beschreibung, sowie Wasser, Beschwerungsmittel, anorganische Salze, Verdickungsmittel und pH-Regulantien enthalten. Es können darüber hinaus noch weitere in Bohrspülungen übliche Additive enthalten sein. Die vorliegende technische Lehre schließt auch ein Verfahren zur Verbesserung der Schmierwirkung von wasserbasierten Bohrspülungen ein, vorzugsweise zum Schmieren von Bohrspülungen, wobei den Spülungen Oligoglycerinester in Mengen von 0,1 bis 10 Gew.-%, bezogen auf die gesamte Spülung, als Additiv zugesetzt werden.

Vorzugsweise werden rein wässerige Bohrspülungen mit dem Additiv versehen. Weiterhin sind WBM auf Basis von synthetischem oder natürlichem Seewasser bevorzugt. Die wasserbasierten Spülungen können vorzugsweise auch Silikate enthalten. Der pH-Wert der wasser-basierten Spülungen liegt vorzugsweise im Bereich von 8 bis 13, und besonders bevorzugt im Bereich von 9 bis 11.

Ein weiterer Gegenstand der vorliegenden Erfindung betrifft die Verwendung der oben Oligoglycerinester als Schmiermittel, vorzugsweise in den oben beschriebenen wasserbasierten Bohrspülmitteln. Bei dieser Verwendung ist es bevorzugt, dass die Reibung des Bohrspülmittels, z.B. mit dem Bohrgestänge und/oder der Formation - durch Zusatz des Mittels messbar gegenüber dem Bohrspülmittel ohne den erfindungsgemäßen Oligoglycerinester verringert wird. Dieses geht häufig mit einer Verringerung der Viskosität des Spülmittels durch Zusatz der erfindungsgemäßen Oligoglycerinester einher.

### Beispiele

### Herstellung der Oligoglycerinester

924 g (77 Gew.-%) eine technischen Ölsäure (Säurezahl 201,2) wurden mit 276 g (23 Gew.-%) Oligoglycerin (OH-Zahl: 1178) (Gewichtsverhältnis 3,3 : 1) in einem Kessel vermischt und anschließend unter einen Stickstoffatmosphäre aus 240 °C erhitzt. Das frei werden Reaktionswasser wurde destillativ entfernt. Nachdem die Säurezahl des Reaktionsgemisches kleiner als 5 war, wurde der Druck auf 22 mbar reduziert. Danach ließ man das Gemisch auf 90 °C abkühlen. Dann wurden 1g (1 Gew.-%) Bleicherde (Tonsil^{®}) zugesetzt und das Gemisch anschließend noch ca. 0,5 h gerührt. Es wurden 1080 g einer rotbraunen, klaren Flüssigkeit erhalten.

Es wurden insgesamt 5 verschiedene Oligoglycerinester mit unterschiedlichem Gewichtsverhältnis zwischen Fettsäure und dem Oligoglycerin hergestellt:

| Additiv Nr. | Fettsäure | Molverhältnis Fettsäure : Oligoglycerin |
|---|---|---|
| (1) | Ölsäure | 4 : 1 |
| (2) | Ölsäure | 3 : 1 |
| (3) | Ölsäure | 2 : 1 |
| (4) | Ölsäure | 1,5 : 1 |
| (5) | Tallölfettsäure | 4 : 1 |

### Anwendungstechnische Prüfungen

### Beispiel 1

Für die Prüfung der Schmierfähigkeit wurde die folgende wasserbasierte Bohrspülung vorbereitet. Das Vermischen wurde in einem Silverson-Mixer durchgeführt:

| | |
|---|---|
| Bariumsulfat | 2425,8 g |
| Wasser | 1915,0 g |
| NaCl-Lsg. (gesättigt) | 1915,0 g |
| RevDust* | 679,5 g |
| Bentonit | 271,8 g |
| Tensid | 68,0 g |
| Lignit | 40,8 g |
| NaOH | 27,2 g |
| Na₂CO₃ | 13,6 g |
| Cellulosederivat | 6,8 g |

| | |
|---|---|
| *Filterasche | |

Anschließend wurde die Schmierfähigkeit der Spülung mit einem Falex^{®} Pin & Vee Block Test Machine, F 1500 Standard, gemäß ASTM D 2670 und ASTM D 3233 geprüft. Dabei wurde zum einen die Spülung ohne Additiv und dann mit 3 Gew.-% eines Additivs (1) bis (5) geprüft.

Zum Vergleich wurde auch der Reibwert für eine Spülung mit 3 Gew.-% des kommerziell erhältlichen Additivs OMC 1037 (Glycerinfettsäuremonoester (Tallölfettsäuremonoglycerid), Hersteller Fa. Cognis Oleochemicals GmbH) Additiv (6) genannt, gemessen.

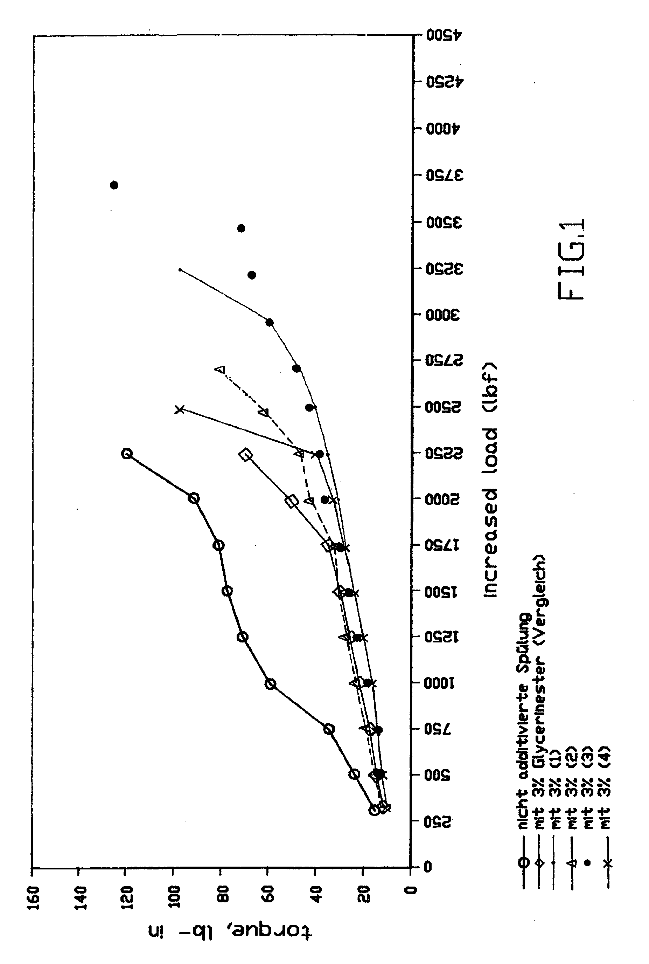

Die Ergebnisse dieser Messungen finden sich in der Abbildung 1. In der Grafik ist das Drehmoment in [lb in] auf der Ordinate gegen steigende Last (in [lbf]) auf der Abszisse aufgetragen. Wie bei anderen Veröffentlichungen zu diesem technischen Sachgebiet üblich werden die Messergebnisse in angelsächsischen Massen angegeben. Es gelten dabei die folgenden Umrechnungsfaktoren in das SI-System: 1 lbf = 4,448 m kg s; 1 lb in= 0,015 m kg

Man erkennt, dass die nicht additivierte Spülung mit steigender Last ein höheres Drehmoment benötigt als die additivierte Spülung.

Das Vergleichsprodukt (6) liefert zwar gute Werte, die aber durch Zusatz der erfindungsgemäßen Additive (1) bis (5) nochmals übertroffen werden konnten.

### Beispiel 2

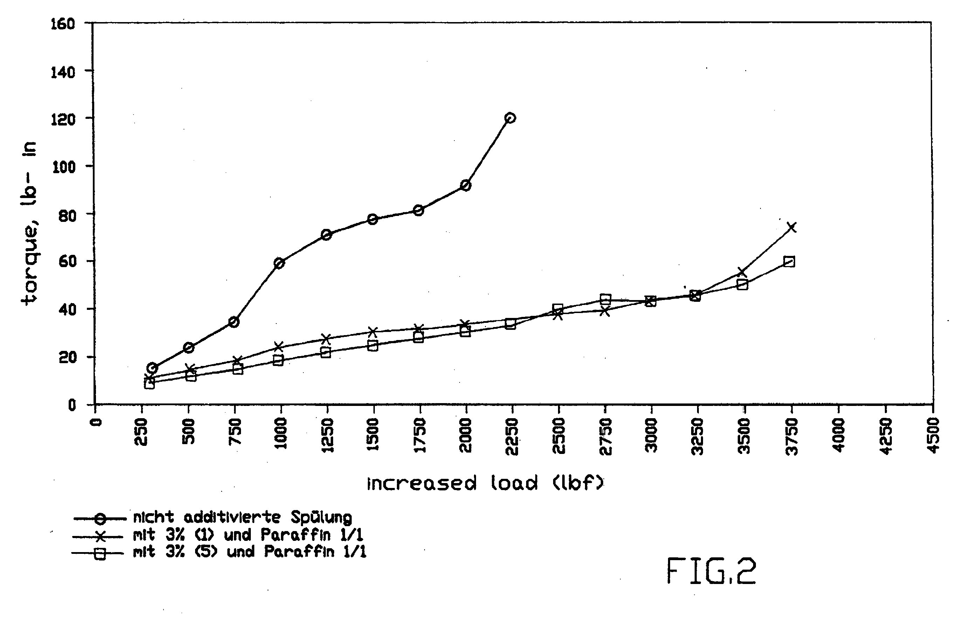

In einem weiteren Versuch wurden solche Formulierungen geprüft, die die Oligoglycerinester in Abmischung mit Paraffinöl enthielten (Gewichtsverhältnis jeweils 1 : 1). Es wurden konkret die Additive (1) und (5) untersucht und mit einer nicht-additivierten Spülung verglichen. Aus der Grafik der Abbildung 2 zeigt sich, dass die Spülung, die die erfindungsgemäßen Additive enthält deutlich bessere Werte erzielt als die nicht additivierte Spülung.

### Beispiel 3

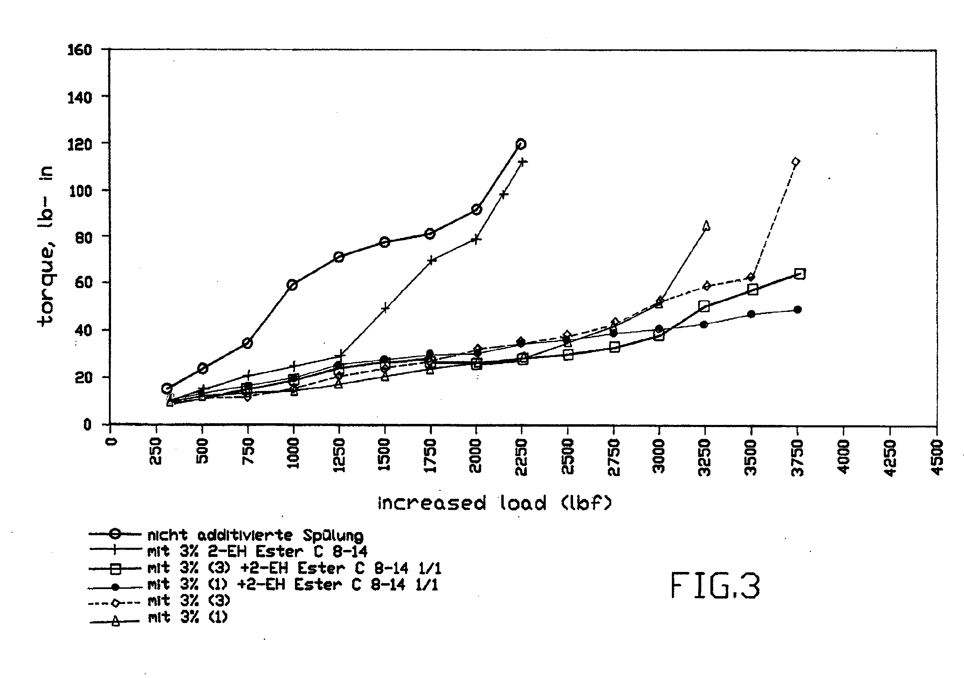

In der Abbildung 3 finden sich Tests bei denen die nicht-additivierte Vergleichspülung mit solchen Spülungen verglichen worden ist, die entweder die Oligoglyceride alleine oder als Additivmischung zusammen mit gesättigten 2-Ethylhexylestem des Fettsäureschnitts C8-C14 im Gewichtsverhältnis 1 : 1 enthielten.

Man erkennt, dass die erfindungsgemäß mit Additiven versehene Spülung bessere Schmierwirkung aufweist als die nicht-additivierte Spülung und auch bessere Werte zeigen, wenn 3 Gew.-% des Esters allein zugegeben werden.

### Beispiel 4

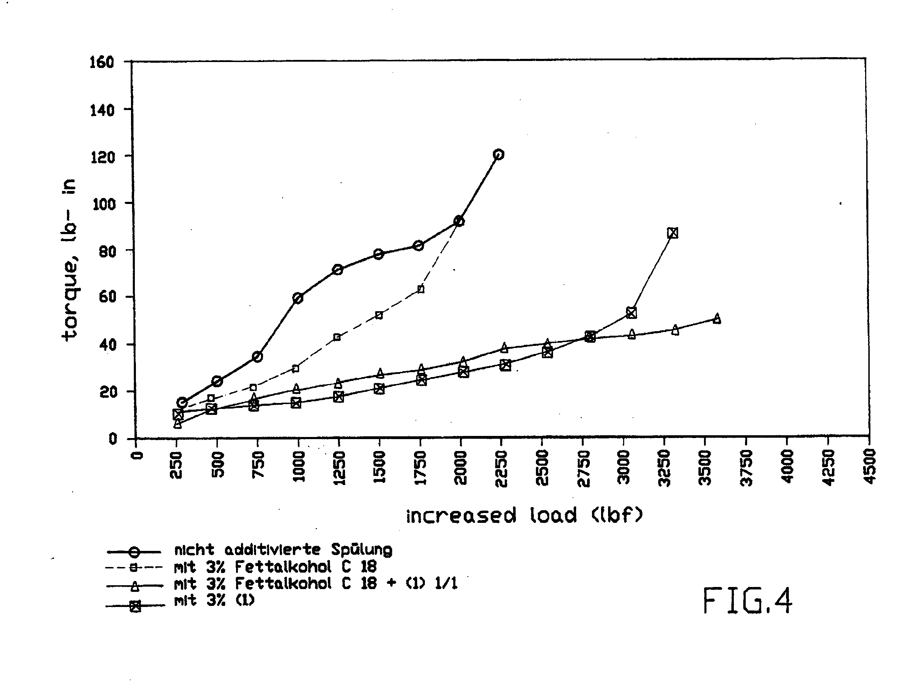

Die Abbildung 4 zeigt das Ergebnis des Schmiermitteltests zu einem ähnlichen Versuch wie im Beispiel 3. Allerdings wurde hier als Vergleich ein Fettalkohol mit 18 C-Atomen ausgewählt. Die Mischung aus Fettalkohol und Oligoglycerid führt zu einer besonders guten Schmierwirkung.

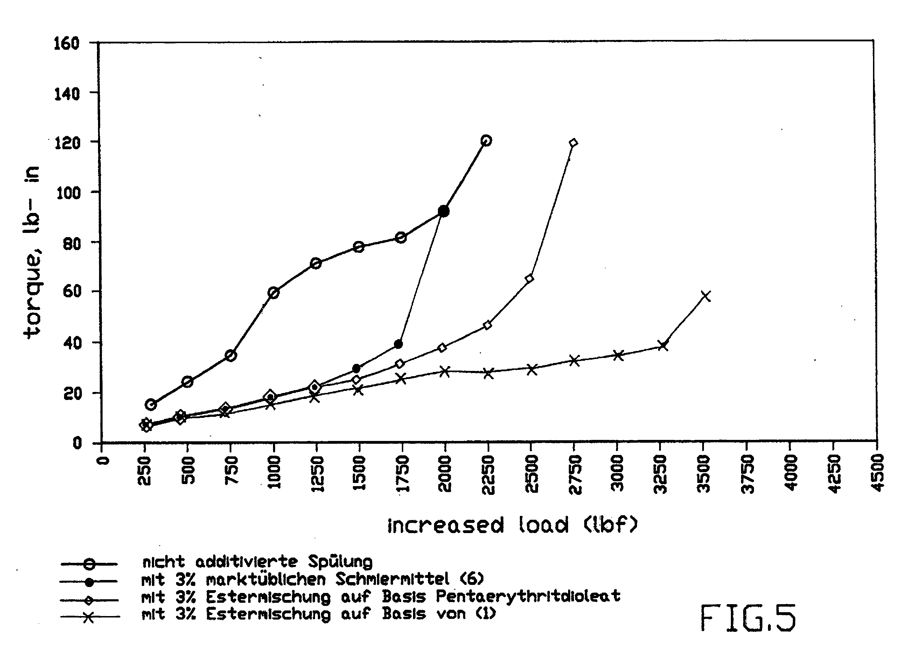

In der Abbildung 5 wurden die Reibwerte für drei marktübliche Produkte mit der nicht additivierten Spülung und einer erfindungsgemäß additivierten Spülung (Additiv (3)) verglichen. Man erkennt die Überlegenheit des erfindungsgemäßen Produktes.

## Patentansprüche

1. Verwendung von Oligoglycerinfettsäureester, hergestellt aus
(a) einer Säurekomponente, ausgewählt aus
(a1) Fettsäuren der allgemeinen Formel (I)
R-COOH (I)
in der R für einen gesättigten oder ungesättigten, verzweigten oder linearen Alkyl- oder Alkenylrest mit 7 bis 21 C-Atomen steht,
wobei als Fettsäuren für die Veresterung die Ölsäure oder die Tallölfettsäuren oder Mischungen davon ausgewählt sind,
und
(b) einer Polyolkomponente, die ausgewählt ist aus Oligoglycerinen oder Alkoxylaten von Oligoglycerinen, wobei die Oligoglycerine Tetraglycerin und Pentaglycerin umfassen.
als Additiv in wasserbasierten Bohrspülmitteln.

2. Verwendung nach Anspruch 1, **dadurch gekennzeichnet, dass** Oligoglycerinfettsäureester ausgewählt sind, die durch Umsetzung von Oligoglycerinen der Formel (II) 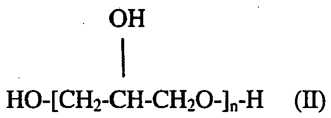 in der n eine Zahl zwischen 1 und 10 bedeutet, mit Fettsäuremischungen, vorzugsweise Mischungen aus gesättigten und ungesättigten Fettsäuren und/oder Dimeren- und/oder oligomeren Fettsäuren hergestellt worden sind.

3. Verwendung nach Anspruch 1 oder 2, **dadurch gekennzeichnet, dass** Tri-, Tetra- und/oder Pentaester der Oligoglycerine verwendet werden.

4. Verwendung nach mindestens einem der Ansprüche 1 bis 3, **dadurch gekennzeichnet, dass** bei der Veresterung das molare Verhältnis von Fettsäuren: Oligoglycerin im Bereich von 5 : 1 bis 1 : 1, vorzugsweise 4 : 1 bis 1 : 1 und insbesondere im Bereich von 4 : 1 bis 1,5 : 1 liegt.

5. Verwendung nach mindestens einem der Ansprüche 1 bis 4, **dadurch gekennzeichnet, dass** man die Oligoglycerinester als Additiv in Abmischung mit Tensiden, Kohlenwasserstoffen, Fettalkoholen, Fettsäurestern und/oder Fettsäuren oder Glycerin, Triglyceriden oder Glykolen einsetzt.

6. Verwendung nach mindestens einem der Ansprüche 1 bis 5, **dadurch gekennzeichnet, dass** die Oligoglycerinfettsäureester zum Schmieren für Bohrspülmittel, vorzugsweise für Bohrspülmittel die mindestens 70 Gew.-% und vorzugsweise mindesten 80 Gew.-% und ganz besonders mindestens 90 Gew.-% Wasser - bezogen auf die bei Raumtemperatur (21 °C) flüssige Phase enthalten, verwendet werden.

7. Verwendung nach mindestens einem der Ansprüche 1 bis 6, **dadurch gekennzeichnet, dass** die Oligoglycerinfettsäureester zum Schmieren in Emulsionsbohrspülmitteln verwendet werden, deren äußere Phase aus Wasser besteht.

8. Verwendung nach mindestens einem der Ansprüche 1 bis 7, **dadurch gekennzeichnet, dass** die Oligoglylcerinester in Mengen von 1 bis 10 Gew.-%, bezogen auf das Gesamtgewicht der Spülung verwendet werden.

9. Verwendung nach mindestens einem der Ansprüche 1 bis 8, **dadurch gekennzeichnet, dass** die Oligoglycerinester als Additive zum Schmieren eingesetzt werden.

10. Wasserbasiertes Bohrspülmittel, enthaltend die Oligoglycerinfettsäureester wie in einem der Ansprüche 1-9 beschrieben,
wobei das wasserbasierte Bohrspülmittel einen pH von 8 bis 13 aufweist und/oder wobei das wasserbasierte Bohrspülmittel ein Additiv ausgewählt aus der Gruppe bestehend aus quellfähigem Ton, einem Korrosionsinhibitor, Bariumsulfat, Calcit, Dolomit, Tannin, Lignit und Lignosulfonat umfasst.

11. Wasserbasiertes Bohrspülmittel, nach Anspruch 10, wobei der quellfähige Ton ausgewählt ist aus der Gruppe bestehend aus Montmorillonit, Bentonit, Beidelitt, Hectorit, Saponit, Stevensit, Attapulgit und Sepiolith.

12. Wasserbasiertes Bohrspülmittel nach Anspruch 10 oder 11, wobei das wasserbasierte Bohrspülmittel die Oligoglycerinfettsäureester wie in einem der Ansprüche 1-9 beschrieben in einer Menge von 10 bis 0,1 Gew.-%, bezogen auf das Gesamtgewicht der Spülung enthält.

## Claims

1. Use of oligoglyceryl fatty acid esters prepared from
(a) an acid component selected from
(a1) fatty acids of the general formula (I)
R-COOH (I)
in which R is a saturated or unsaturated, branched or linear alkyl or alkenyl residue having 7 to 21 carbon atoms,
wherein as fatty acids for the esterification oleic acid or tall oil fatty acids or mixtures thereof are selected,
and
(b) a polyol component selected from oligoglycerols or alkoxylates of oligoglycerols, wherein the oligoglycerols comprise tetraglycerol and pentaglycerol,
as an additive in water-based drilling muds.

2. Use according to Claim 1, **characterized in that** oligoglycerol fatty acid esters are selected which have been prepared by reaction of oligoglycerols of the formula (II) 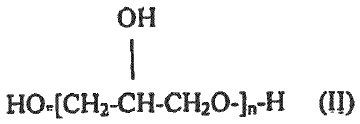 wherein n is a number from 1 to 10 with fatty acid mixtures, preferably with mixtures of saturated and unsaturated fatty acids and/or dimeric- and/or oligomeric fatty acids.

3. Use according to Claim 1 or 2, **characterized in that** tri-, tetra- and/or pentaesters of the oligoglycerols are used.

4. Use according to at least one of Claims 1 to 3, **characterized in that** the molar ratio of fatty acids:oligoglycerol in the esterification is in the range from 5:1 to 1:1, preferably 4:1 to 1:1, and especially in the range from 4:1 to 1.5:1.

5. Use according to at least one of Claims 1 to 4, **characterized in that** the oligoglyceryl esters are used as an additive in a mixture with surfactants, hydrocarbons, fatty alcohols, fatty acid esters and/or fatty acids, or glycerol, triglycerides or glycols.

6. Use according to at least one of Claims 1 to 5, **characterized in that** the oligoglyceryl fatty acid esters are used for lubrication for drilling muds, preferably for drilling muds containing at least 70% by weight and preferably at least 80% by weight and most preferably at least 90% by weight of water - based on the phase which is liquid at room temperature (21°C).

7. Use according to at least one of Claims 1 to 6, **characterized in that** the oligoglyceryl fatty acid esters are used for lubrication in emulsion drilling muds wherein the outer phase of said emulsion drilling muds consists of water.

8. Use according to at least one of Claims 1 to 7, **characterized in that** the oligoglyceryl esters are used in amounts of 1 to 10% by weight, based on the total weight of the mud.

9. Use according to at least one of Claims 1 to 8, **characterized in that** the oligoglyceryl esters are used as additives for lubrication.

10. Water-based drilling mud comprising the oligoglyceryl fatty acid esters as described in any of Claims 1-9,
wherein the water-based drilling mud has a pH of 8 to 13,
and/or wherein the water-based drilling mud comprises an additive selected from the group consisting of swellable clay, a corrosion inhibitor, barium sulphate, calcite, dolomite, tannin, lignite and lignosulphonate.

11. Water-based drilling mud according to Claim 10, wherein the swellable clay is selected from the group consisting of montmorillonite, bentonite, beidellite, hectorite, saponite, stevensite, attapulgite and sepiolite.

12. Water-based drilling mud according to Claim 10 or 11, wherein the water-based drilling mud comprises the oligoglyceryl fatty acid esters as described in any of Claims 1-9 in an amount of 10 to 0.1% by weight, based on the total weight of the mud.

## Revendications

1. Utilisation d'esters d'acides gras avec des oligoglycérols, préparés à partir
(a) d'un composant acide, choisi parmi
(a1) des acides gras de formule générale (I)
R-COOH (I)
dans laquelle R représente un radical alkyle ou alcényle linéaire ou ramifié, saturé ou insaturé, ayant de 7 à 21 atomes de carbone,
en choisissant comme acides gras pour l'estérification l'acide oléique ou les acides gras de tallôl ou des mélanges de ceux-ci,
et
(b) d'un composant polyol, qui est choisi parmi des oligoglycérols ou des produits d'alcoxylation d'oligoglycérols, les oligoglycérols comprenant le tétraglycérol et le pentaglycérol,
en tant qu'additif dans des fluides de forage à base aqueuse.

2. Utilisation selon la revendication 1, **caractérisée en ce qu'**on choisit des esters d'acides gras avec des oligoglycérols qui ont été préparés par mise en réaction d'oligoglycérols de formule (II) 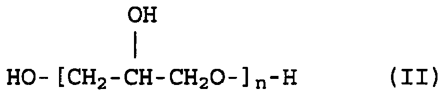 dans laquelle n représente un nombre compris entre 1 et 10, avec des mélanges d'acides gras, de préférence des mélanges d'acides gras saturés et insaturés et/ou d'acides gras dimères et/ou oligomères.

3. Utilisation selon la revendication 1 ou 2, **caractérisée en ce qu'**on utilise des tri-, tétra- et/ou pentaesters des oligoglycérols.

4. Utilisation selon au moins l'une quelconque des revendications 1 à 3, **caractérisée en ce que** dans l'estérification le rapport molaire des acides gras à l'oligoglycérol se situe dans la plage allant de 5 : 1 à 1 : 1, de préférence de 4 : 1 à 1 : 1 et en particulier dans la plage de 4 : 1 à 1,5 : 1.

5. Utilisation selon au moins l'une quelconque des revendications 1 à 4, **caractérisée en ce qu'**on utilise les esters d'oligoglycérols comme additif en mélange avec des tensioactifs, des hydrocarbures, des alcools gras, des esters d'acides gras et/ou des acides gras ou du glycérol, des triglycérides ou des glycols.

6. Utilisation selon au moins l'une quelconque des revendications 1 à 5, **caractérisée en ce qu'**on utilise les esters d'acides gras avec des oligoglycérols pour la lubrification pour des fluides de forage, de préférence pour des fluides de forage qui contiennent au moins 70 % en poids et de préférence au moins 80 % en poids et de façon tout particulièrement préférée au moins 90 % en poids d'eau - par rapport à la phase liquide à la température ambiante (21 °C).

7. Utilisation selon au moins l'une quelconque des revendications 1 à 6, **caractérisée en ce qu'**on utilise les esters d'acides gras avec des oligoglycérols pour la lubrification dans des fluides de forage en émulsion dont la phase externe consiste en eau.

8. Utilisation selon au moins l'une quelconque des revendications 1 à 7, **caractérisée en ce qu'**on utilise les esters d'oligoglycérols en des quantités de 1 à 10 % en poids, par rapport au poids total du fluide de forage.

9. Utilisation selon au moins l'une quelconque des revendications 1 à 8, **caractérisée en ce qu'**on utilise les esters d'oligoglycérols en tant qu'additifs pour la lubrification.

10. Fluide de forage à base aqueuse, contenant les esters d'acides gras avec des oligoglycérols tels que décrits dans l'une quelconque des revendications 1 à 9, le fluide de forage à base aqueuse présentant un pH de 8 à 13 et/ou le fluide de forage à base aqueuse comprenant un additif choisi dans le groupe constitué par l'argile gonflante, un agent anticorrosion, le sulfate de baryum, la calcite, la dolomite, le tanin, la lignite et le lignosulfonate.

11. Fluide de forage à base aqueuse selon la revendication 10, dans lequel l'argile gonflante est choisie dans le groupe constitué par la montmorillonite, la bentonite, la beidellite, l'hectorite, la saponite, la stevensite, l'attapulgite et la sépiolite.

12. Fluide de forage à base aqueuse selon la revendication 10 ou 11, le fluide de forage à base aqueuse contenant les esters d'acides gras avec des oligoglycérols tels que définis dans l'une quelconque des revendications 1 à 9 en une quantité de 10 à 0,1 % en poids, par rapport au poids total du fluide de forage.
